# EUROPÄISCHE PATENTSCHRIFT

(11) **EP 2 427 686 B1**
(45) Veröffentlichungstag und Bekanntmachung des Hinweises auf die Patenterteilung: **04.09.2013**
(21) Anmeldenummer: 10717143.1
(22) Anmeldetag: 03.05.2010
(51) Int. Cl.: F16M 13/02

(54) **AUFHÄNGEVORRICHTUNG FÜR BILDSCHIRME**
SUSPENSION DEVICE FOR SCREENS
DISPOSITIF DE SUSPENSION POUR ÉCRANS

(30) Priorität: 06.05.2009 DE 202009006585 U
(43) Veröffentlichungstag der Anmeldung: 14.03.2012
(73) Patentinhaber: Exact Planwerk Gmbh, 51427 Bergisch Gladbach (DE)
(72) Erfinder: HELLENTHAL, Gregor, D-53773 Hennef (DE); HACHE, Ralph, Rudolf, D-53819 Neunkirchen-Seelscheid (DE)
(74) Vertreter: von Kreisler Selting Werner
(86) Internationale Anmeldenummer: PCT/EP2010/055983
(87) Internationale Veröffentlichungsnummer: WO 2010/128018

(56) Entgegenhaltungen:
- DE-B3-102006 025 724
- GB-A- 2 203 586
- JP-A- 5 056 375
- JP-A- 2006 287 562
- US-A- 5 523 790
- US-A1- 2006 266 898
- US-A1- 2007 153 138
- US-B1- 6 550 521

## Beschreibung

Die Erfindung betrifft eine Bildschirmwand mit mindestens zwei Bildschirmen mit jeweils rechteckförmigem Bildformat, und mit einer Aufhängevorrichtung für die Bildschirme.

Unter einer Bildschirmwand werden mehrere vertikal übereinander und/oder horizontal nebeneinander angeordnete Bildschirme nach Art einer Videowand verstanden. Solche Bildschirmwände finden zum Beispiel Anwendung zur Präsentation auf Messen, wobei die einzelnen Bildschirme häufig nicht jeweils dasselbe Bild ausgeben sollen, sondern sich insgesamt zu einem kombinierten großen Bildschirm, der ein einziges Bild ausgibt, zusammensetzen. Hierbei ist es wünschenswert, die Abstände zwischen benachbarten Bildschirmen so gering wie möglich zu halten, um den Effekt des resultierenden Gesamtbildes nicht unnötig zu beeinträchtigen,

Bislang wurden Bildschirme in Bildschirmwänden jeweils von einem Rahmen getragen, der fest mit einem Bildschirm verbunden ist. Um eine Bildschirmwand zu bilden, müssen die mit den Bildschirmen verbundenen Rahmen jeweils an einer Tragwand befestigt werden. Bei der exakten Ausrichtung der Rahmen zueinander, um gleichmäßige Abstände zwischen den Bildschirmen zu erzeugen, ergeben sich Schwierigkeiten. Bei dem Auf- und Abbau einer Bildschirmwand oder bei einer Umgestaltung einer bestehenden Bildschirmwand ist jeder Rahmen mitsamt dem Bildschirm zu montieren und auszurichten.

Bekannte Bildschirmwände werden beschrieben in JP 5 056 375 A, US 5,523,790 A, US 2007/153138 A1, DE 10 2006 025 724 B3, JP 2006287562 A und US 2006/266898 A1.

Der Erfindung liegt die Aufgabe zugrunde, eine leichte, einfach zu montierende Bildschirmwand mit mindestens zwei Bildschirmen mit rechteckförmigem Bildschirmformat und einer die Bildschirme miteinander verbindenden Aufhängevorrichtung zu schaffen.

Die erfindungsgemäße Bildschirmwand ist definiert durch die Merkmale von Patentanspruch 1.

Gemäß Patentanspruch 1 weist die Aufhängevorrichtung mindestens ein Rahmenelement mit in frontaler Draufsicht im Wesentlichen quadratischer äußerer Form auf, wobei die Länge der äußeren Kanten im Wesentlichen der Länge der kürzeren Kante des rechteckigen Bildformats entspricht. Das Rahmenelement weist eine Aufnahme, vorzugsweise als Aufhängung, für den Bildschirm auf.

Der Bildschirm wird mit seiner Rückseite an dem Rahmenelement angebracht. Aufgrund der quadratischen äußeren Form, deren Kantenlänge der kürzeren Bildformatkante entspricht, steht das Rahmenelement nicht über die äußeren Abmessungen des Bildschirmgehäuses wesentlich hervor, sondern schließt mit den beiden längeren Kanten des Bildschirmgehäuses bündig ab. Gegenüber den beiden kürzeren Kanten weicht das Rahmenelement hinter das Bildschirmgehäuse zurück. Dadurch können benachbarte Bildschirme zum Herstellen einer Bildschirmwand mit aneinander grenzenden Kanten untereinander verbunden werden. Hierbei sind die Rahmenelemente jeweils an mindestens einer äußeren Kante zur Befestigung mindestens eines weiteren identischen Rahmenelements ausgebildet. Aus der frontalen Draufsicht auf die Bildschirme grenzen die Bildschirmgehäuse unmittelbar aneinander, ohne dass das Spaltmaß zwischen benachbarten Bildschirmen unnötig durch das Rahmenelement vergrößert wird. Zudem ist das Rahmenelement kleiner als die bisherigen Tragrahmen und hat dadurch ein geringeres Gewicht. Um einen Bildschirm oder eine Bildschirmwand zu montieren, wird zunächst das Rahmenelement an einer Tragwand oder an einem Ständer befestigt, zum Beispiel festgeschraubt. Anschließend kann der betreffende Bildschirm auf einfache Weise in die Aufnahme eingehängt werden. Der erfindungsgemäße Vorteil besteht darin, dass der Bildschirm nicht mehr in Verbindung mit seinem Tragrahmen an einer Wand festzuschrauben ist, sondern dass die Aufhängevorrichtung es auf einfache Weise ermöglicht, den Bildschirm z.B. an einer Wand aufzuhängen, wodurch die Montage vereinfacht wird.

Die Aufhängevorrichtung weist ein Abstandshalteelement auf, das auf zwei einander gegenüberliegenden Seiten jeweils zur Befestigung an einer äußeren Kante mindestens eines Rahmenelements ausgebildet ist. Das Abstandshalteelement dient zum Verbinden mindestens zweier Rahmenelemente untereinander zu einem starren Tragrahmen für eine Bildschirmwand aus mindestens zwei Bildschirmen. Das Abstandshalteelement wird an derjenigen äußeren Kante des betreffenden Rahmenelements, die von einem aufgehängten

Bildschirm überdeckt wird, befestigt. Hierbei hat das Abstandshalteelement eine in frontaler Draufsicht im Wesentlichen rechteckige äußere Form, wobei die Längen zweier einander gegenüberliegender Kanten im Wesentlichen der kürzeren Kante des Bildformats entsprechen. Die Kanten, deren Längen der Länge des Bildformats entsprechen, sind die Verbindungskanten zur Befestigung an dem Rahmenelement. Die beiden übrigen Kanten des Abstandshalteelements sind vorzugsweise von einer solchen Länge, dass die Bildschirme zweier durch das Abstandshalteelement miteinander verbundenen Rahmenelemente bis auf einen geringen Abstand von wenigen Millimetern und vorzugsweise von weniger als 1 mm aneinander grenzen. Dies wird erreicht, wenn die Länge dieser Kanten geringfügig größer ist, als die Differenz der Länge der längeren Bildformatkante und der Länge einer der äußeren Rahmenelementkanten.

Mit einer solchermaßen aus Rahmenelementen und Abstandshalteelementen gebildeten Aufhängevorrichtung ist es möglich, Bildschirme derart in vertikaler und horizontaler Richtung aneinandergrenzend aufzuhängen, dass sowohl die kurzen Bildschirmkanten als auch die langen Bildschirmkanten bis auf einen geringen Abstand aneinander grenzen. Hierbei kann durch exaktes Positionieren der Rahmenelemente und der Abstandshalteelemente, zum Beispiel an einer Tragwand, eine stabile Aufhängevorrichtung für eine komplette Bildschirmwand gebildet werden. In eine solche Aufhängevorrichtung brauchen die betreffenden Bildschirme nur noch in die zugehörigen Aufnahmen eingehängt werden.

Die Aufnahme für die Bildschirme ist vorzugsweise als Öffnung für komplementäre Zapfen an der Rückseite des Bildschirmgehäuses ausgebildet. Hierbei sollte die Aufnahme zum Halten des Bildschirms entweder in horizontaler oder in vertikaler Ausrichtung ausgebildet sein, so dass der Bildschirm wahlweise in horizontaler oder in vertikaler Ausrichtung aufgenommen werden kann, ohne das Rahmenelement zu drehen. Dadurch können Bildschirmwände mit rechteckförmigen Bildformaten, zum Beispiel im 16:9 oder im 4:3 Bildformat, mit wahlweise hochkant oder quer angeordneten Bildschirmen gebildet werden. Bei hochkant angeordneten Bildschirmen werden die Rahmenelemente in vertikaler Richtung übereinander durch Abstandshalteelemente miteinander verbunden. Bei Queranordnung der Bildschirme werden die Rahmenelemente in horizontaler Richtung durch Abstandshalteelemente miteinander verbunden.

Zum Stützen der Aufhängevorrichtung nach unten ist vorteilhafterweise ein Stützelement für ein zugehöriges Rahmenelement vorgesehen. Das Stützelement ist hierbei nach Art des Rahmenelements und/oder eines Abstandshalteelements ausgebildet, um zusammen mit mehreren Rahmenelementen und Abstandshalteelementen die Aufhängevorrichtung in modularer Bauweise zu bilden. Das Stützelement hat hierbei eine in frontaler Draufsicht im Wesentlichen rechteckige äußere Form, wobei die Längen zweier einander gegenüberliegender Kanten im Wesentlichen der kürzeren Kantenlänge des Bildformats entsprechen. Die Längen der beiden übrigen Kanten des Stützelements entsprechen im Wesentlichen der halben Differenz der Länge der langen Bildformatkanten und der Kantenlänge des Rahmenelements. Das heißt mit anderen Worten, dass das Stützelement in Draufsicht halb so groß ist, wie ein Abstandshalteelement. Das Stützelement dient dazu, bei vertikal angeordneten Bildschirmen das jeweils unterste Rahmenelement nach unten abzustützen, wobei das mit dem Rahmenelement verbundene Stützelement in Draufsicht vollständig von dem über das Rahmenelement hinausragenden Teil des Bildschirms überdeckt wird. Bei vertikal anzuordnenden Bildschirmen werden also benachbarte Rahmenelemente in vertikaler Richtung durch Abstandshalteelemente miteinander verbunden und das jeweils unterste Abstandshalteelement wird durch ein Stützelement nach unten begrenzt. Das Stützelement kann beispielsweise zur Befestigung an einen Standfuß oder an einer Wand ausgebildet sein.

Das Rahmenelement, das Abstandshalteelement und/oder das Stützelement werden jeweils durch ein Rahmenprofil gebildet, auf das mindestens ein Präzisionsrahmen, zum Beispiel durch Nieten oder Schweißen, aufgesetzt ist. Das Rahmenprofil hat den Vorteil, mit großen Fertigungstoleranzen zur Erlangung einer großen Stabilität hergestellt werden zu können, während der Präzisionsrahmen zum Beispiel als Gusselement aus Kunststoff mit geringen Fertigungstoleranzen herstellbar ist. Der Präzisionsrahmen dient zum Anliegen benachbarter Rahmenelemente, Abstandshalteelemente und/oder Stützelemente und ermöglicht hohe Passgenauigkeiten und geringe Spaltmaße benachbarter Bildschirme der Bildschirmwand. Vorzugsweise sind genau zwei Präzisionsrahmen gleicher Größe auf einander gegenüberliegenden Seiten des Rahmenprofils vorgesehen. Hierbei können die beiden Präzisionsrahmen in Draufsicht derart gegenüber dem Rahmenprofil verschoben angeordnet sein, dass die Präzisionsrahmen mindestens auf einer Seite über das Rahmenprofil hinausragen und an der gegenüberliegenden Seite gegenüber dem Rahmenprofil zurückweichen. Auf diese Weise ist eine Verbindung zwischen benachbarten Rahmenelementen oder zwischen Rahmenelement und Abstandshalteelement beziehungsweise Stützelement nach Art von Nut und Feder geschaffen, wobei das über die Präzisionsrahmen hinausragende Rahmenprofil an ein gegenüber den Präzisionsrahmen zurückweichendes Rahmenprofil angefügt wird. Erfindungsgemäß liegt der Vorteil in der Aufhängevorrichtung darin, dass Breitformatbildschirme auf einfache Weise ohne störende zusätzliche Ränder passgenau mit Abständen von weniger als 1 mm und vorzugsweise einem Zehntel Millimeter in präziser Ausrichtung zueinander zu einer Bildschirmwand kombiniert werden können.

Im Folgenden werden anhand der Figuren drei Ausführungsbeispiele der Erfindung näher erläutert.

Es zeigen:
- Figur 1: ein Rahmenelement eines ersten Ausführungsbeispiels in frontaler Draufsicht,
- Figur 2: ein Abstandshalteelement des ersten Ausführungsbeispiels,
- Figur 3: das Abstandshalteelement gemäß Figur 2 aus Richtung des Pfeils III in Figur 2,
- Figur 4: die Aufhängevorrichtung mit dem Rahmenelement nach Figur 1, dem Abstandshalteelement nach Figur 2 und mit eingehängtem Bildschirm,
- Figur 5: ein zweites Ausführungsbeispiel einer Aufhängevorrichtung einer Bildschirmwand,
- Figur 6: ein drittes Ausführungsbeispiel einer Aufhängevorrichtung einer Bildschirmwand,
- Figur 7: ein viertes Ausführungsbeispiel einer Aufhängevorrichtung einer Bildschirmwand und
- Figur 8: ein fünftes Ausführungsbeispiel einer Aufhängevorrichtung einer Bildschirmwand.

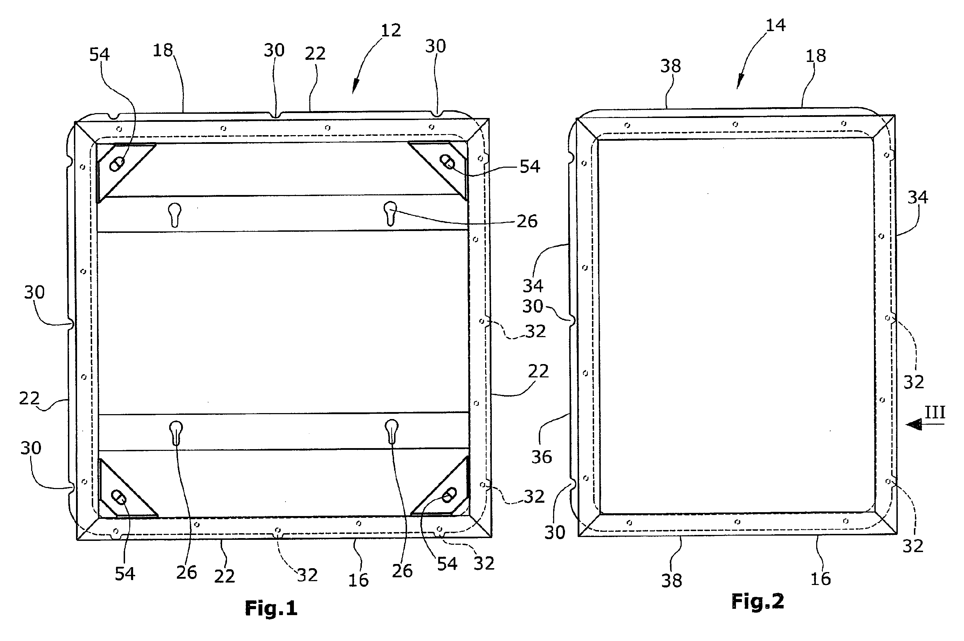

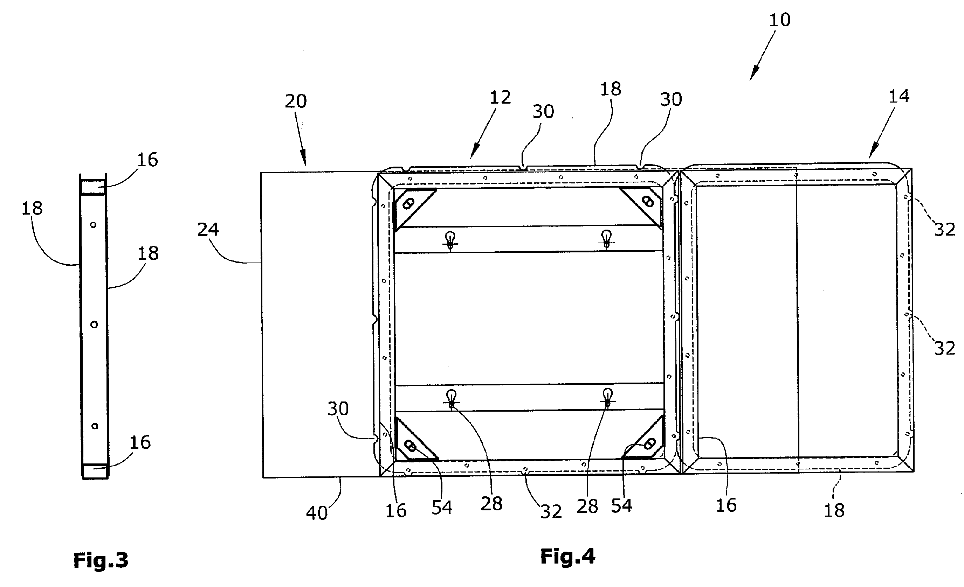

Die Aufhängevorrichtung 10 des ersten Ausführungsbeispiels gemäß den Figuren 1-4 besteht aus dem in Figur 1 gezeigten Rahmenelement 12 und dem in den Figuren 2 und 3 gezeigten Abstandshalteelement 14. Das Rahmenelement 12 und das Abstandshatteelement 14 sind jeweils aus einem Rahmenprofil 16 und zwei Präzisionsrahmen 18 gebildet, die auf einander gegenüberliegenden Seiten, wie in Figur 3 dargestellt, an dem Rahmenprofil 16 befestigt sind. Jedes Rahmenprofil 16 ist aus herkömmlichen stabilen Metallprofilen zusammengeschweißt. Jeder Präzisionsrahmen 18 ist ein präzise, zum Beispiel durch CNC-Fräsen oder Lasern, gefertigtes einstückiges Teil mit geringen Toleranzen von ca. einem Zehntel Millimeter Genauigkeit. Jeder Präzisionsrahmen 18 ist auf das zugehörige Rahmenprofil 16 aufgeschweißt. Die Rahmenprofile 16 jedes Rahmenelements 12 sind zur Befestigung an einer Wand und zum Tragen jeweils eines Bildschirms 20 ausgebildet. Die Rahmenprofile 16 verleihen der Aufhängevorrichtung 10 die zum Tragen der Bildschirme 20 nötige Stabilität und können mit vergleichsweise großen Toleranzen gefertigt werden. Die Präzisionsrahmen 18 sind mit geringen Fertigungstoleranzen von ca. einem Zehntel Millimeter gefertigt und dienen zur passgenauen Präzisionsausrichtung der Rahmenelemente 12, Abstandshalteelemente 14 und möglicher Stützelemente zueinander.

Ein Rahmenprofil 16 und die zugehörigen Präzisionsrahmen 18 sind in Draufsicht von gleicher Größe, wobei die Präzisionsrahmen 18 gegenüber dem Rahmenprofil 16 in den Figuren 1 und 2 nach links und nach oben versetzt sind. Dadurch ragen die Präzisionsrahmen 18 in den Figuren 1 und 2 nach links und nach oben über das Rahmenprofil 16 hinaus und weichen jeweils nach unten und nach rechts gegenüber dem Rahmenprofil 16 zurück. Figur 3 zeigt in seitlicher Darstellung die über das Rahmenprofil 16 nach oben hinausragenden und gegenüber dem Rahmenprofil nach unten zurückweichenden Präzisionsrahmen 18. Dadurch wird eine Seite mit hinausragenden Präzisionsrahmen 18 an eine Seite mit zurückweichenden Präzisionsrahmen 18 angefügt, so dass zwischen benachbarten Rahmenelementen, oder zwischen Rahmenelement und Abstandshalteelement eine Verbindung nach Art von Nut und Feder geschaffen wird. Die Nut wird jeweils durch das gegenüber den Präzisionsrahmen 18 zurückweichenden Rahmenprofil 16 gebildet und die Feder wird jeweils durch das gegenüber den Präzisionsrahmen 18 hervorstehende Rahmenprofil 16 gebildet.

Das Rahmenprofil 16 und die Präzisionsrahmen 18 eines Rahmenelements 12 haben, wie in Figur 1 gezeigt, eine in Draufsicht im Wesentlichen quadratische äußere Form, so dass das Rahmenelement 12 in Draufsicht ebenfalls eine im Wesentlichen quadratische äußere Form aufweist. Die Länge der äußeren Kanten 22 des Rahmenelements 12 ist gleich der Länge der kürzeren Kante 24 des Bildschirms 20. Das Rahmenelement 12 hat vier Öffnungen als Aufnahme 26 für den Bildschirm 20. Der Bildschirm 20 hat an der Rückseite seines Gehäuses entsprechende Zapfen 28 zum Einsetzen in die Öffnungen der Aufnahme 26 entweder in horizontaler oder in vertikaler Ausrichtung des Bildschirms 20. Die Öffnungen der Aufnahme 26 haben in Draufsicht eine birnen- oder schlüssellochartige Form, so dass ein bajonettartiger Verschluss für den Eingriff des Zapfens 28 geschaffen wird. Figur 4 zeigt den in die Aufnahme 26 eingehängten Bildschirm 20.

Jeder Präzisionsrahmen 18 hat an mindestens einer äußeren Kante Vertiefungen 30 und an der jeweils gegenüberliegenden Kante komplementäre Vorsprünge 32 zum Eingriff in die Vertiefungen 30 eines angrenzenden Präzisionsrahmens. Durch den Eingriff der Vorsprünge 32 in Vertiefungen 30 eines benachbarten Präzisionsrahmens und durch Anliegen der angrenzenden Präzisionsrahmenkanten aneinander werden benachbarte Rahmenelemente 12 oder ein Rahmenelement 12 und ein Abstandshalteelement 14 präzise zueinander ausgerichtet.

Das Abstandshalteelement 14 gemäß Figur 2 ist auf zwei einander gegenüberliegenden Seiten 34 zur Befestigung an einer äußeren Kante 22 eines benachbarten Rahmenelements 12 ausgebildet. Hierbei greifen die Vertiefungen 30 des Abstandshalteelements 14 in entsprechende Vorsprünge 32 des Rahmenelements 12. Auf der gegenüberliegenden Seite greifen entsprechende Vorsprünge 32 des Abstandshalteelements 14 in entsprechende Vertiefungen 30 eines Rahmenelements 12. Figur 4 zeigt ein auf diese Weise mit einem Rahmenelement 12 verbundenes Abstandshalteelement 14.

Das Rahmenprofil 16 und die Präzisionsrahmen 18 jedes Abstandshalteelements 14 haben, wie in Figur 2 gezeigt, jeweils eine in Draufsicht im Wesentlichen rechteckige äußere Form, so dass das Abstandshalteelement 14 ebenfalls in Draufsicht im Wesentlichen rechteckförmig ist. Hierbei entspricht die Länge der längeren Kante 36 des Abstandshalteelements 14 der Länge einer äußeren Kante 22 des Rahmenprofils 16. Die Länge der kürzeren Kante 38 des Abstandshalteelements 14 entspricht der Differenz der langen Kante 40 des Bildschirms 20 und der Länge der Kante 22 des Rahmenelements 12. Dadurch ragt der in das Rahmenelement 12 eingehängte Bildschirm 20 gemäß Figur 4 an seiner über das Rahmenelement 12 hinausragenden Seite bis zur Mitte des Abstandshalteelements 14. Bei auf diese Weise benachbart zueinander angeordneten Bildschirmen 20 werden die die Bildschirme 20 tragenden Rahmenelemente 12 und die die Rahmenelemente 12 miteinander verbindenden Abstandshalteelemente 14 vollständig von den Bildschirmen 20 verdeckt und sind aus frontaler Draufsicht auf die Bildschirmwand nicht sichtbar.

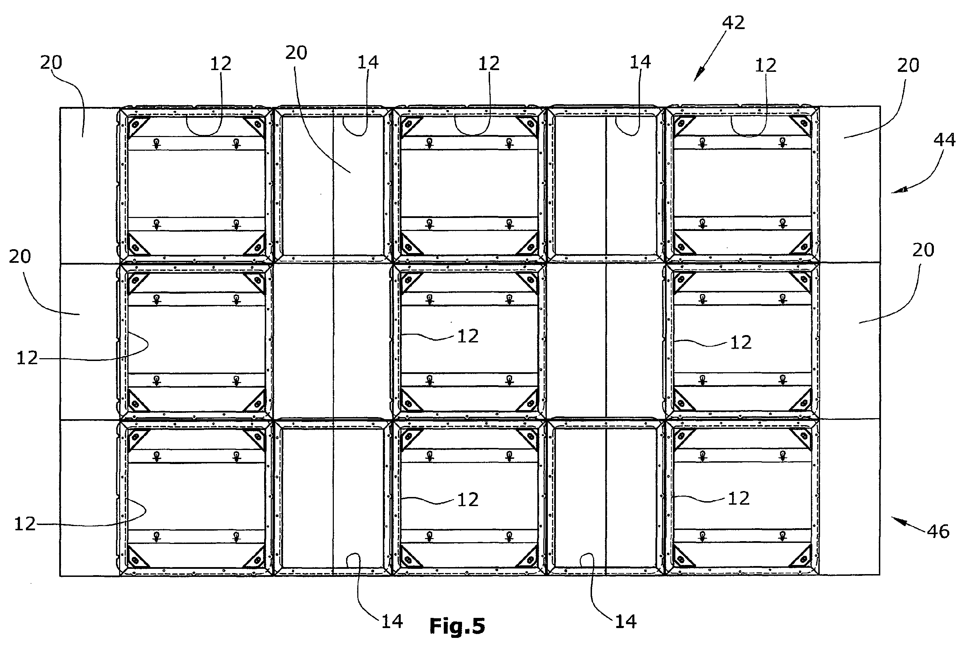

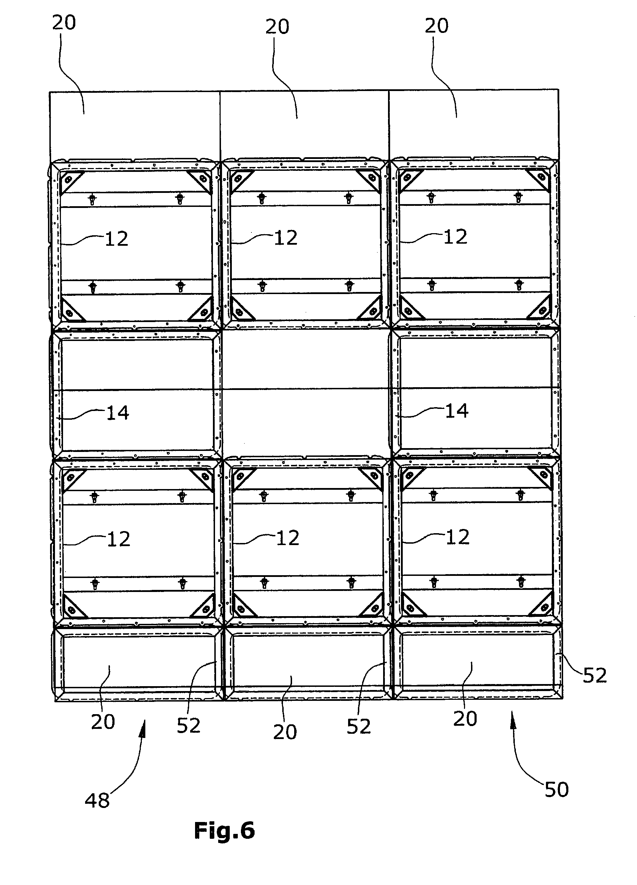

Weitere Ausführungsbeispiele einer auf diese Weise gebildeten Bildschirmwand 42 sind in den Figuren 5 und 6 gezeigt.

Bei dem Ausführungsbeispiel in Figur 5 sind die Bildschirme 20 quer, das heißt horizontal, ausgerichtet. Jeder Bildschirm 20 ist an einem zugehörigen Rahmenelement 12 aufgehängt. Die Rahmenelemente der obersten Zeile 44 und der untersten Zeile 46 sind durch Abstandshalteelemente 14 in horizontaler Richtung miteinander verbunden. Die Rahmenelemente 12 sind jeweils in vertikaler Richtung direkt miteinander verbunden. Die Aufhängevorrichtung 10 des Ausführungsbeispiels gemäß Figur 5 besteht zur Aufhängung von neun Breitformatbildschirmen in horizontaler Ausrichtung, aus neun Rahmenelementen 12 und vier Abstandshalteelementen 14.

Das Ausführungsbeispiel nach Figur 6 zeigt eine Bildschirmwand 42 mit hochkant, das heißt vertikal, angeordneten Bildschirmen 20. Jeder Bildschirm 20 wird von einem Rahmenelement 12 getragen. Benachbarte Rahmenelemente 12 sind in horizontaler Richtung, das heißt zeilenweise, direkt miteinander verbunden. In vertikaler Richtung sind benachbarte Rahmenelemente der beiden äußeren Spalten 48, 50 durch Abstandshalteelemente 14 miteinander verbunden. Die untersten Rahmenelemente 12 sind nach unten jeweils von einem Stützelement 52 gestützt. Jedes Stützelement 52 ist aus einem nicht dargestellten Rahmenprofil 16 und entsprechenden Präzisionsrahmen 18 zusammengesetzt, wobei die Größe jedes Stützelements 52 genau der halben Größe eines Abstandshalteelements 14 entspricht. Dadurch sind die Stützelemente, die jeweils nur mit einem darüber liegenden Rahmenelement 12 verbunden sind, von den hochkant aufgehängten Bildschirmen 20 aus frontaler Draufsicht vollständig bedeckt. Die Stützelemente 52 dienen zur Befestigung der Bildschirmwand beispielsweise an nicht dargestellten Standfüßen. Jedes Stützelement 52 hat eine in Draufsicht im Wesentlichen rechteckige Form, wobei die Länge der längeren Stützelementkante der Länge der Kante eines Rahmenelements 12 entspricht. Die Länge der kürzeren Stützelementkante entspricht der Hälfte der längeren Kante eines Abstandshalteelements 14.

Jedes Rahmenelement 12 hat eine Befestigungseinrichtung 54 aus vier Tragbügeln, die zum Festschrauben an einer Haltewand oder an einem Ständer ausgebildet sind.

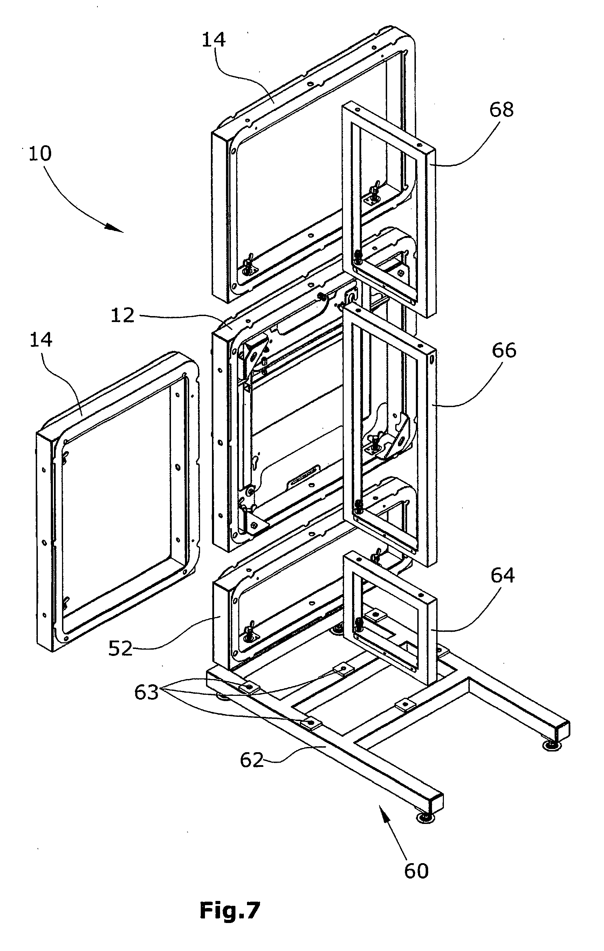

Figur 7 zeigt die erfindungsgemäße Variante einer von einem Ständer 60 gestützten und getragenen Aufhängevorrichtung 10. Der Ständer 60 hat einen Standfuß 62, der zur Auflage auf einem Untergrund ausgebildet ist. Der Standfuß 62 ist mit Aufnahmen 63 in Form von Löchern versehen, in die ein Stützelement 52, ein Rahmenelement 12, ein Abstandshalteelement 14 und/oder Standelemente 64, 66, 68 wahlweise oder in verschiedenen Kombinationen eingesteckt werden können. In Figur 7 wird ein Stützelement 52 in zwei Aufnahmen 63 des Standfußes 62 eingesteckt und ein Stützelement-Standelement 64 wird in weitere Aufnahmen 63 derart eingesteckt, dass das Stützelement-Standelement 64 das Stützelement 62 abstützt und dessen statische Kräfte auf den Standfuß 62 überträgt. Auf das Standelement 64 ist ein Standelement 66 für ein Rahmenelement 12 aufgesteckt. Das Rahmenelement 12 wird in üblicher Weise mit dem Stützelement 52 verbunden und von diesem gestützt, und das Standelement 66 wird mit dem Standelement 64 und mit dem Rahmenelement 12 derart verbunden, dass das Standelement 66 das Rahmenelement 12 stützt und die Standelemente 66, 64 die statischen Kräfte des Rahmenelements 12 auf den Standfuß 62 übertragen. In entsprechender Weise ist ein Standelement 68 für ein Abstandshalteelement 14 mit dem Standelement 66 verbunden, so dass das Standelement 68 statische Kräfte eines darüberliegenden, weiteren, in Figur 7 nicht dargestellten, Standelements 66 aufnimmt und über die darunterliegenden Standelemente 64, 66 auf den Standfuß 62 überträgt. Die Standelemente 64, 66, 68 sind jeweils in ihrer Größe an ein Stützelement 52, ein Rahmenelement 12 bzw. an ein Abstandshalteelement 14 angepasst und können zum flexiblen und individuellen Aufbau einer Bildschirmwand in verschiedenen Positionen relativ zueinander miteinander und mit dem Standfuß 62 zu einem Ständer 60 verbunden werden.

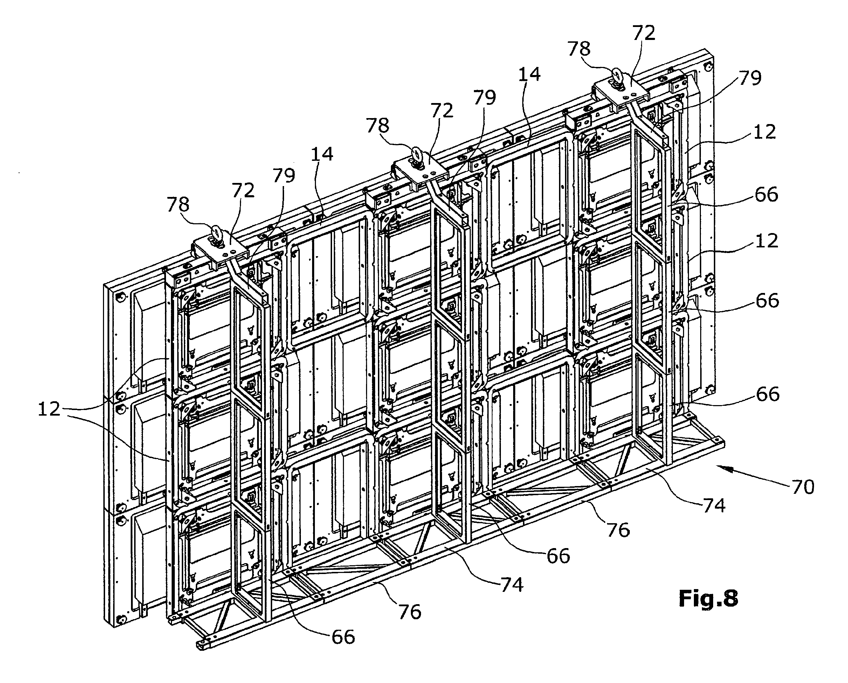

Figur 8 zeigt eine erfindungsgemäße Variante, bei der die gesamte Bildschirmwand mit einer Aufhängung 70 an einer Decke oder einem Traggerüst aufgehängt wird, ohne dass eine Unterstützung nach unten gegenüber dem Untergrund erfolgt. Die Aufhängung 70 wird für eine Bildschirmwand aus neun Bildschirmen durch drei Aufhängebügel 72 gebildet, die mit den Rahmenelementen 12 der drei obersten Bildschirme verbunden sind. Jeder Aufhängebügel 72 ist mit einer Öse 78 versehen, an der ein Tragseil befestigt ist. Zudem weist jeder Aufhängebügel 72 einen senkrecht zu der Ebene der Bildschirmwand abstehenden Tragbügel 79 auf, der zur Verbindung mit einem vertikalen Standelement 66 für ein Rahmenelement 12 ausgebildet ist. Auf diese Weise sind die drei vertikal übereinander angeordneten Bildschirme jeder Spalte der Bildschirmwand in Figur 8 durch miteinander verbundene Standelemente 66 unterstützt und versteift, wobei das jeweils unterste Standelement 66 mit einem Horizontal-Standelement 74 T-förmig verbunden ist. Jedes Horizontal-Standelement 74 ist wiederum mit dem unteren Rand des untersten Rahmenelements 12 verbunden. Die Horizontal-Standelemente 74 sind untereinander jeweils durch ein weiteres Standelement 76 verbunden, welches in seiner Größe den zwischen den Rahmenelementen 12 angeordneten Abstandshalteelementen 14 entspricht und mit einem solchen jeweils verbunden ist. Auf diese Weise wird eine in Horizontalrichtung und in Vertikalrichtung versteifende Aufhängung 70 für eine Bildschirmwand geschaffen, die es ermöglicht, die Bildschirmwand freihängend und stabilisiert aufzuhängen.

## Patentansprüche

1. Bildschirmwand mit mindestens zwei Bildschirmen (20) mit rechteckförmigem Bildformat und einer die Bildschirme (20) miteinander verbindenden Aufhängevorrichtung (10), wobei die Aufhängevorrichtung (10) für jeden Bildschirm (20) mindestens ein Rahmenelement (12) mit einer Aufnahme (26) für den Bildschirm (20) aufweist,
wobei die Länge der äußeren Kanten (22) im Wesentlichen der Länge der kürzeren Kante (24) des Bildformats entspricht, und
die Aufhängevorrichtung (10) mindestens ein Abstandshalteelement (14) aufweist, das auf zwei einander gegenüberliegenden Seiten (34) zur Befestigung an einer äußeren Kante (22) jeweils mindestens eines Rahmenelements (12) ausgebildet ist,
**dadurch gekennzeichnet, dass**
das Rahmenelement (12) eine in der Draufsicht im Wesentlichen quadratische äußere Form aufweist,
wobei das Abstandshalteelement (14) eine in Draufsicht im Wesentlichen rechteckige äußere Form aufweist, wobei die Länge zweier einander gegenüberliegender Kanten im Wesentlichen der Länge der kürzeren Kante (24) des Bildformats entspricht, und wobei die Länge der beiden übrigen Kanten im Wesentlichen der halben Differenz der Länge der längeren Kanten des Bildformats und der Länge einer der äußeren Kanten (22) des Rahmenelements (12) entspricht.

2. Bildschirmwand nach Anspruch 1, **dadurch gekennzeichnet, dass** das Rahmenelement (12) an mindestens einer äußeren Kante (22) zur Befestigung mindestens eines weiteren identischen Rahmenelements (12) ausgebildet ist.

3. Bildschirmwand nach einem der vorhergehenden Ansprüche, **dadurch gekennzeichnet, dass** das Rahmenelement (12) eine Befestigungseinrichtung (54) zur Befestigung an einer Wand oder an einem Halter aufweist.

4. Bildschirmwand nach einem der vorhergehenden Ansprüche, **dadurch gekennzeichnet, dass** die Aufnahme (26) mindestens eine erste Befestigungseinrichtung zum Herstellen einer lösbaren Steckverbindung mit jeweils einer zweiten Befestigungseinrichtung (28) an der Rückseite des Bildschirmgehäuses aufweist.

5. Bildschirmwand nach einem der vorhergehenden Ansprüche, **dadurch gekennzeichnet, dass** die Aufnahme (26) zum Halten des Bildschirms (20) in horizontaler oder in vertikaler Ausrichtung vorgesehen ist.

6. Bildschirmwand nach einem der vorhergehenden Ansprüche, **dadurch gekennzeichnet, dass** ein Stützelement (52) mit in Draufsicht im Wesentlichen rechteckiger äußerer Form vorgesehen ist, wobei die Länge zweier einander gegenüberliegender Kanten im Wesentlichen der Länge der kürzeren Kante (24) des Bildformats entspricht, und wobei die Länge der beiden übrigen Kanten im Wesentlichen der halben Differenz der Länge der längeren Kante des Bildformats und der Länge einer der äußeren Kanten (22) des Rahmenelements (12) entspricht.

7. Bildschirmwand nach einem der vorhergehenden Ansprüche, **dadurch gekennzeichnet, dass** das Rahmenelement (12), das Abstandshalteelement (14) und/oder das Stützelement (52) jeweils ein stabiles Rahmenprofil (16) und mindestens einen auf das Rahmenprofil (16) aufgesetzten Präzisionsrahmen (18) mit geringen Fertigungstoleranzen aufweisen.

8. Bildschirmwand nach Anspruch 7, **dadurch gekennzeichnet, dass** das Rahmenprofil (16) und der Präzisionsrahmen (18) jeweils eine in Draufsicht im Wesentlichen rechteckige äußere Form gleicher Kantenlänge aufweisen, wobei der Präzisionsrahmen (18) in Draufsicht derart gegenüber dem Rahmenprofil (16) verschoben angeordnet ist, dass der Präzisionsrahmen (18) mindestens auf einer Seite über das Rahmenprofil (16) hinausragt und an der gegenüberliegenden Seite (34) gegenüber dem Rahmenprofil (16) zurückweicht.

9. Bildschirmwand nach einem der Ansprüche 1-8, **dadurch gekennzeichnet, dass** die Aufhängevorrichtung (10) einen Ständer (60) aufweist, der mindestens einen Standfuß (62) und mindestens ein von dem Standfuß (62) getragenes Standelement (64, 66, 68) enthält, wobei der Standfuß (62) und das Standelement (64, 66, 68) ein Rahmenelement (12), ein Abstandshalteelement (14) und/oder ein Stützelement (52) stützen.

10. Bildschirmwand nach einem der Ansprüche 1-9, **dadurch gekennzeichnet, dass** die Aufhängevorrichtung (10) eine Aufhängung (70) mit mindestens einem Aufhängebügel (72) zum Aufhängen der Aufhängevorrichtung (10) und mit mindestens einem der Standelemente (66, 74, 76) zum Stützen und Versteifen der hängenden Aufhängevorrichtung (10) aufweist.

## Claims

1. A screen wall comprising at least two screens (20) having a rectangular image format, and comprising a suspension device (10) connecting the screens (20) to each other, the suspension device (10) comprising, for each screen (20), at least one frame element (12) including a receiving means (26) for the screen (20),
the length of the outer edges (22) substantially corresponding to the length of the shorter edge (24) of the screen format, and
the suspension device (10) comprising at least one spacer element (14) which on two mutually opposite sides (34) is configured for attachment on an outer edge (22) of respectively at least one frame element (12),
**characterized in that**
the frame element (12) has a substantially square outer shape when seen in plan view, the spacer element (14) having a substantially rectangular outer shape when seen in plan view, the lengths of two mutually opposite edges substantially corresponding to the length of the shorter edge (24) of the image format, and the length of the two other edges substantially corresponding to half the difference between the length of the longer edges of the image format and the length of one of the outer edges of the frame element (12).

2. The screen wall according to claim 1, **characterized in that** the frame element (12) on at least one outer edge (22) is configured for attachment of at least one further identical frame element (12).

3. The screen wall according to any one of the previous claims, **characterized in that** the frame element (12) comprises a fastening means (54) for attachment to a wall or to a holder.

4. The screen wall according to any one of the previous claims, **characterized in that** the receiving means (26) comprises at least a first fastening means for establishing a releasable plug-in connection with respectively a second fastening means (28) at the rear side of the screen casing.

5. The screen wall according to any one of the previous claims, **characterized in that** the receiving means (26) is provided for holding the screen (20) in horizontal or vertical orientation.

6. The screen wall according to any one of the previous claims, **characterized in that** a support element (52), having a substantially rectangular outer shape when seen in plan view, is provided, the length of two mutually opposite edges substantially corresponding to the length of the shorter edge (24) of the image format, and the length of the two other edges substantially corresponding to half the difference between the length of the longer edge of the image format and the length of one of the outer edges (22) of the frame element (12).

7. The screen wall according to any one of the previous claims, **characterized in that** the frame element (12), the spacer element (14) and/or the support element (52) each comprise a stabile frame profile (16) and at least one precision frame (18) with small manufacturing tolerances which is mounted on the frame profile (16).

8. The screen wall according to claim 7, **characterized in that** the frame profile (16) and the precision frame (18), when seen in plan view, each have a substantially rectangular outer shape with equal edge length, the precision frame (18), when seen in plan view, being arranged at such an offset relative to the frame profile (16) that the precision frame (18) at least on one side extends beyond the frame profile (16) and on the opposite side (34) is set back relative to the frame profile (16).

9. The screen wall according to any one of claims 1-8, **characterized in that** the suspension device (10) comprises a stand (60) having at least one base foot (62) and one stand element (64,66,68) carried by the base foot (62), with the base foot (62) and the stand element (64,66,68) being arranged to support a frame element (12), a spacer element (14) and/or a support element (52).

10. The screen wall according to any one of claims 1-9, **characterized in that** the suspension device (10) comprises a suspension means (70) including at least one suspension bracket (72) for suspension of the suspension device (10) and including at least one of the stand elements (66,74,76) for supporting and reinforcing the suspended suspension device (10).

## Revendications

1. Panneau d'écrans comprenant au moins deux écrans (20) à format d'affichage rectangulaire et un dispositif de suspension (10) reliant les écrans (20) ensemble, le dispositif de suspension (10) comportant, pour chaque écran (20), au moins un élément cadre (12) pourvu d'un logement (26) pour l'écran (20), la longueur des bords extérieurs (22) correspondant sensiblement à la longueur du bord le plus court (24) du format d'affichage, et
le dispositif de suspension (10) présentant au moins un élément d'écartement (14) qui, sur chacun des deux côtés opposés (34), est conçu pour la fixation d'au moins un élément cadre (12) sur un bord extérieur (22),
**caractérisé en ce que**
l'élément cadre (12), vu en plan, a une forme extérieure sensiblement carrée, l'élément d'écartement (14) présentant, vu en plan, une forme extérieure sensiblement rectangulaire, la longueur de deux bords opposés correspondant sensiblement à la longueur du bord le plus court (24) du format d'affichage, et la longueur des deux autres bords correspondant sensiblement à la moitié de la différence entre la longueur des bords les plus longs du format d'affichage et la longueur de l'un des bords extérieurs (22) de l'élément cadre (12).

2. Panneau d'écrans selon la revendication 1, **caractérisé en ce que** l'élément cadre (12), sur au moins un bord extérieur (22), est conçu pour la fixation d'au moins un autre élément cadre (12) identique.

3. Panneau d'écrans selon l'une des revendications précédentes, **caractérisé en ce que** l'élément cadre (12) présente un dispositif de fixation (54) destiné à être fixé sur une paroi ou un support.

4. Panneau d'écrans selon l'une des revendications précédentes, **caractérisé en ce que** le logement (26) présente au moins un premier dispositif de fixation permettant de créer une liaison enfichable amovible avec respectivement un second dispositif de fixation (28) sur la face arrière du châssis d'écran.

5. Panneau d'écrans selon l'une des revendications précédentes, **caractérisé en ce que** le logement (26) est prévu pour maintenir l'écran (20) en direction horizontale ou verticale.

6. Panneau d'écrans selon l'une des revendications précédentes, **caractérisé en ce qu'**est prévu un élément d'appui (52) ayant, vu en plan, une forme extérieure sensiblement rectangulaire, la longueur de deux bords opposés correspondant sensiblement à la longueur du bord le plus court (24) du format d'affichage, et la longueur des deux autres bords correspondant sensiblement à la moitié de la différence entre la longueur du bord le plus long du format d'affichage et la longueur de l'un des bords extérieurs (22) de l'élément cadre (12).

7. Panneau d'écrans selon l'une des revendications précédentes, **caractérisé en ce que** l'élément cadre (12), l'élément d'écartement (14) et/ou l'élément d'appui (52) présentent chacun un profilé cadre (16) stable et au moins un cadre de précision (18) posé sur le profilé cadre (16) et ayant de faibles tolérances de fabrication.

8. Panneau d'écrans selon la revendication 7, **caractérisé en ce que** le profilé cadre (16) et le cadre de précision (18) présentent chacun, vus en plan, une forme extérieure sensiblement rectangulaire d'une longueur de bord identique, le cadre de précision (18) étant, en vue du dessus, décalé par rapport au profilé cadre (16) de telle sorte que le cadre de précision (18) dépasse, au moins sur un côté, du profilé cadre (16) et est en retrait sur le côté opposé (34) par rapport au profilé cadre (16).

9. Panneau d'écrans selon l'une des revendications 1 à 8, **caractérisé en ce que** le dispositif de suspension (10) présente un support (60) qui comporte au moins un pied (62) et au moins un élément vertical (64, 66, 68) porté par le pied (62), le pied (62) et l'élément vertical (64, 66, 68) supportant un élément cadre (12), un élément d'écartement (14) et/ou un élément d'appui (52).

10. Panneau d'écrans selon l'une des revendications 1 à 9, **caractérisé en ce que** le dispositif de suspension (10) présente une suspension (70) comportant au moins un étrier de suspension (72) destiné à suspendre le dispositif de suspension (10) et au moins l'un des éléments verticaux (66, 74, 76) destiné à supporter et raidir le dispositif de suspension (10) suspendu.
